# EUROPEAN PATENT SPECIFICATION

(11) **EP 3 163 903 B1**
(45) Date of publication and mention of the grant of the patent: **19.06.2019**
(21) Application number: 15191381.1
(22) Date of filing: 26.10.2015
(51) Int. Cl.: H04R 1/32, H04R 3/00

(54) **ACCOUSTIC PROCESSOR FOR A MOBILE DEVICE**
AKUSTISCHER PROZESSOR FÜR EINE MOBILE VORRICHTUNG
PROCESSEUR ACOUSTIQUE POUR UN DISPOSITIF MOBILE

(43) Date of publication of application: 03.05.2017
(73) Proprietor: NXP B.V., 5656 AG Eindhoven (NL)
(72) Inventor: MACOURS, Christophe Marc, 5656 AG Eindhoven (NL)
(74) Representative: Miles, John Richard

(56) References cited:
- US-A1- 2005 136 848
- US-A1- 2014 270 312

## Description

This disclosure relates to an acoustic processor for a mobile device and a method of acoustic processing for a mobile device.

Directional sound capture is used in many applications, ranging from studio music recording to audio-visual recording in both professional and consumer cameras. Directional sound capture uses directional microphones or microphone arrays combined with sophisticated array processing algorithms to obtain the desired spatial responses.

Small form factor consumer devices, such as mobile phones or wearables are usually equipped with multiple microphones (typically 2 or more) primarily used for beamforming and non-stationary noise suppression in handset and hands-free voice call applications. Recent applications such as camcording also make use of multiple microphones for stereo or multichannel sound recording.

In flat form factor devices such as smartphones, microphones are usually mounted on the edges of the device. In single-microphone devices, the microphone is placed at the bottom, usually either front-facing or bottom-facing. In dual-microphone devices, one microphone is located at the top, usually either back-facing or top-facing.

US 20140270312 A1 describes systems and methods for using a speaker as a microphone in a mobile device.

Various aspects of the invention are defined in the accompanying claims. In a first aspect there is defined a mobile device comprising: an acoustic processor ; a speaker including a speaker membrane, the speaker membrane having a first speaker membrane side and second speaker membrane side opposite the first speaker membrane side; a mobile device housing for providing a first acoustic path between the first speaker membrane side and the exterior of the mobile device and a second acoustic path between the second speaker membrane side and the exterior of the mobile device; wherein the mobile device is operable to configure the speaker as a microphone, and the acoustic processor is configured and arranged to sense a signal on an acoustic processor input coupled to at least one terminal of the speaker; process the induced signal to discriminate between acoustic waves from different directions; and output the processed signal on an acoustic processor output.

The acoustic processor may receive a signal from a speaker used as a microphone and process the signal to allow front to back discrimination i.e. discriminate between and acoustic source located in front of the mobile device and a further acoustic source located behind the mobile device. This may be used for example in camcorder modes of mobile phones to capture a subject's speech and supress speech from a user of the mobile phone.

In embodiments of the mobile device the acoustic processor may be further configured to mix the induced signal with a further signal sensed via a microphone in response to the at least one acoustic source.

The acoustic processor may include a mixer to combine the induced signal from the speaker as microphone with a microphone signal. The resulting processed signal from the acoustic process may comprise the mixed signal and further signal in varying proportions. The mixer may apply filtering and beamforming to the input signals. The response of the induced signal may be equalized to for example align the response of the speaker with an omnidirectional microphone. This aligned response may allow beam forming using the signals from the microphone and the speaker to provide directional selectivity.

In embodiments of the mobile device the acoustic processor may be further configured to determine a signal to noise ratio from at least one of the induced signal and the further signal and to alter the mixing ratio between the induced signal and the further signal dependent on the signal to noise ratio.

In embodiments of the mobile device, the acoustic processor may be further configured to process the induced signal to discriminate between an acoustic signal received from an acoustic source in a first direction and a further acoustic signal received from a further acoustic source in a second direction.

In embodiments of the mobile device the acoustic processor may be further configured to process the induced signal to discriminate between an acoustic source located in a first direction with respect to the mobile device and a further acoustic source located in a second direction with respect to the mobile device.

Each side of the speaker membrane, that is to say each of the major surfaces may be acoustically coupled to the exterior of the mobile device. The speaker may have a directional response characteristic.

In some examples of mobile devices, all microphones may be located in the same plane and only allow a spatial discrimination along the sides of the phone, that is to say top-to-bottom, left-to-right. Form factor constraints may make it difficult to mount two microphones in an end-fire configuration along the front-back axis so as to allow front-back directivity control. In some examples of mobile devices, a third microphone may be placed near the receiver speaker and sharing the same acoustical port. The third microphone may be used for active noise cancellation in handset mode or as additional microphone in camcording mode so as to obtain an improved front-back discrimination due to the acoustical shadowing of the device for sources located at the back of the device.

In embodiments the mobile device may comprise a camera and be configurable in a camcorder mode of operation, and the acoustic processor may be further configured to store the processed signal.

In embodiments of the mobile device comprising a camera, the mobile device may be configurable in a video call mode, and further configured to transmit the processed signal to a receiver of a video call.

In embodiments, a mobile device including the acoustic processor may be configured as one of a mobile phone, a wearable device, a portable audio player, a personal digital assistant, a laptop, a tablet computer.

In a second aspect, there is defined a method of acoustic processing for a mobile device, the mobile device comprising a speaker including a speaker membrane, the speaker membrane having a first speaker membrane side and second speaker membrane side opposite the first speaker membrane side, a mobile device housing for acoustically coupling each speaker membrane side to the exterior of the mobile device, the method comprising: sensing a signal induced on at least one terminal of the speaker in response to acoustic waves, and processing the induced signal; to discriminate between acoustic waves from different directions; and outputting a processed signal.

In embodiments, the method may further comprise sensing a further signal via a microphone, and combining the induced signal and the further signal.

In embodiments, the method may further comprise estimating the signal to noise ratio from the further signal.

Estimating the signal to noise ratio may be used to determine a measure of the ambient noise.

In embodiments, the method may further comprise estimating the signal to noise ratio value from the induced signal.

In embodiments of the method processing the induced signal may comprise at least one of attenuating the induced signal for a signal to noise ratio value above a predetermined threshold and attenuating the further signal for a signal to noise ratio value below the predetermined threshold.

In a further aspect there is described the use of the speaker as a directional microphone in a mobile device comprising a speaker including a speaker membrane, the speaker membrane having a first speaker membrane side and second speaker membrane side opposite the first speaker membrane side, a mobile device housing for providing a first acoustic path between the first speaker membrane side and the exterior of the mobile device and a second acoustic path between the second speaker membrane side and the exterior of the mobile device.

Embodiments may include an article of manufacture including at least one non-transitory, tangible machine readable storage medium containing executable machine instructions for execution by a processor, wherein the article includes a speaker including a speaker membrane, the speaker membrane having a first speaker membrane side and second speaker membrane side opposite the first speaker membrane side, a housing for acoustically coupling each speaker membrane side to the exterior of the article; and wherein the instructions include sensing a signal induced on at least one terminal of the speaker configured as a microphone in response to at least one acoustic source , and processing the induced signal; wherein at least one characteristic of the processed signal is dependent on the orientation of the mobile device with respect to the at least one acoustic source.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as a transient signal. Such a transient signal may be a network download, including an internet download.

In the figures and description like reference numerals refer to like features. Embodiments of the invention are now described in detail, by way of example only, illustrated by the accompanying drawings in which:
Figure 1a shows an exterior view of a mobile phone including directional sound capture according to an embodiment and figure 1b shows the mobile smart phone including a speaker and an acoustic processor according to an embodiment.
Figure 2 illustrates the acoustic coupling between the speaker membrane and the exterior of the mobile phone of figure 1.
Figure 3 shows a graph of an example directional response of a speaker configured as a microphone in the embodiment of figure 1.
Figure 4 shows a mobile device including an acoustic processor according to an embodiment.
Figure 5 illustrates an acoustic processor for one or more mobile devices according to an embodiment.
Figure 6 shows a method of acoustic processing in a mobile device according to an embodiment.
Figure 7 illustrates a method of acoustic processing in a mobile device according to an embodiment.
Figure 8 shows a method of acoustic processing in a mobile device according to an embodiment.

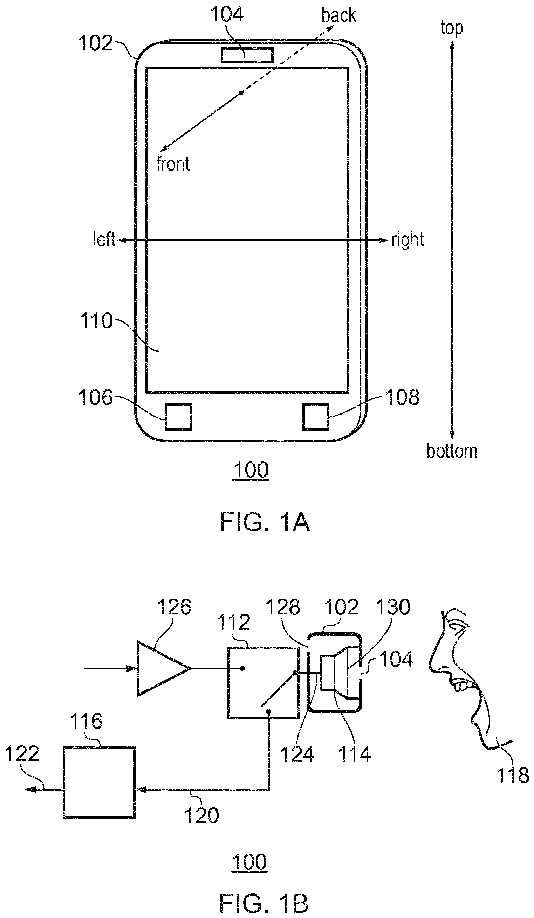

Figure 1 shows in figure 1A a mobile phone 100 showing the housing and location of speaker aperture. Figure IB shows the mobile phone 100 including a speaker 114 and an acoustic processor 116. Firstly referring to figure 1A, mobile phone 100 may have a housing 102 and an aperture 104 in one of the major surfaces of the housing which may be referred to as the front of the mobile phone. The mobile phone 100 may also have operating buttons 106 and 108 located towards one of the edges of the housing 102. The surface of the mobile phone 100 may include a touch sensitive display 110. The mobile phone 100 may also have one or more microphones (not shown). Now referring to figure IB, a speaker 114 including a speaker membrane 130 or diaphragm. The speaker membrane 130 may have a first side or surface which may face towards the aperture 104 so may be considered for example front facing. The speaker membrane 130 may have a second side or surface facing away from the aperture 104 which may for example be considered back facing. The speaker 130 may emit the acoustic signal, typically an audible signal which may for example contain speech and/or music via a first acoustic path through the aperture 104. The aperture 104 may therefore acoustically couple the first side of the speaker membrane to the exterior of the mobile phone 100.

The speaker 114 may be a receiver speaker for use in a handset voice call mode of operation whereby the receiver speaker is closely coupled to the ear of a user. This is typically referred to as a near field mode of operation. The housing 102 may have a further aperture 128 which may provide a further acoustic path from the exterior of the mobile device 100 to the second side of the speaker membrane via the back of the speaker 114. The skilled person will appreciate that there may be an acoustic path through the back of the speaker to the second side of the speaker membrane 130 via the aperture 128. Consequently the further aperture 128 in the housing 102 may provide an acoustic coupling between the second side of the speaker membrane 130 and the exterior of the mobile phone 100.

The speaker 114 may be driven by an amplifier 126 which may be connected to the speaker via a switch 112. The switch 112 may be controlled by a controller (not shown) and connect the amplifier 126 to the speaker 114. The switch 112 may connect an acoustic processor input 120 of the acoustic processor 116 to the speaker 114.

The skilled person will appreciate that the switch 112 may be implemented in hardware using MOS transistors. The switch 112 may be controlled by a controller implemented in hardware or a combination of hardware and software. The switch 112 may be implemented by any hardware or software which allows a signal to be either driven from the amplifier 126 to the speaker 114 or routed from the speaker terminal or terminals 124 to the acoustic processor input 120.

The acoustic processor 116 may be implemented in hardware/software or a combination of hardware and software. The acoustic processor 116 may be implemented for example using software running on a digital signal processor. The acoustic processor 116 may apply filters, and/or equalization to an acoustic signal received on the acoustic processor input 120. The acoustic processor 116 may apply threshold value to the acoustic signal that is to say compare the acoustic signal with an expected minimum level. It will be appreciated that the acoustic processor 116, the amplifier 110 which may be a class D audio amplifier and the switch 112 are illustrated as being outside the housing 102 but will be contained within the housing 102 of the mobile device.

In operation of the mobile phone 100, in a first mode which may for example be a mode whereby a user is making a voice call, the amplifier 110 may be connected to the loudspeaker 114 via the switch 112. The speaker 114 is then used in its intended operation mode as a receiver speaker in a so-called near field mode of operation whereby speech received from a third-party may be heard by the user of the mobile phone 100. The speaker 114 is typically closely coupled to the ear of a user 118 in this mode and so is typically at a distance of less than 1 cm from the ear of a user 118. In a second mode of operation, the acoustic processor input 120 may be connected to one or more speaker terminals 124 via the switch 112. The speech of user 118 of the mobile phone 100 may induce a signal on the terminal 124 of the speaker 114. The speech signal may be processed by the acoustic processor 116 and the processed speech signal may be output on the acoustic processor output 122.

The inventor has realised that the response of the speaker used in this way may be direction dependent and so may be processed to, for example, discriminate between acoustic sources dependent on their location with respect to the front or back of the mobile phone 100, since the processed signal characteristics such as amplitude, frequency, gain may vary dependent on the orientation of the mobile phone 100 with respect to a particular acoustic source. The processed signal may improve the quality of the speech signal or other desired source with respect to background acoustic sources which may be considered as noise sources.

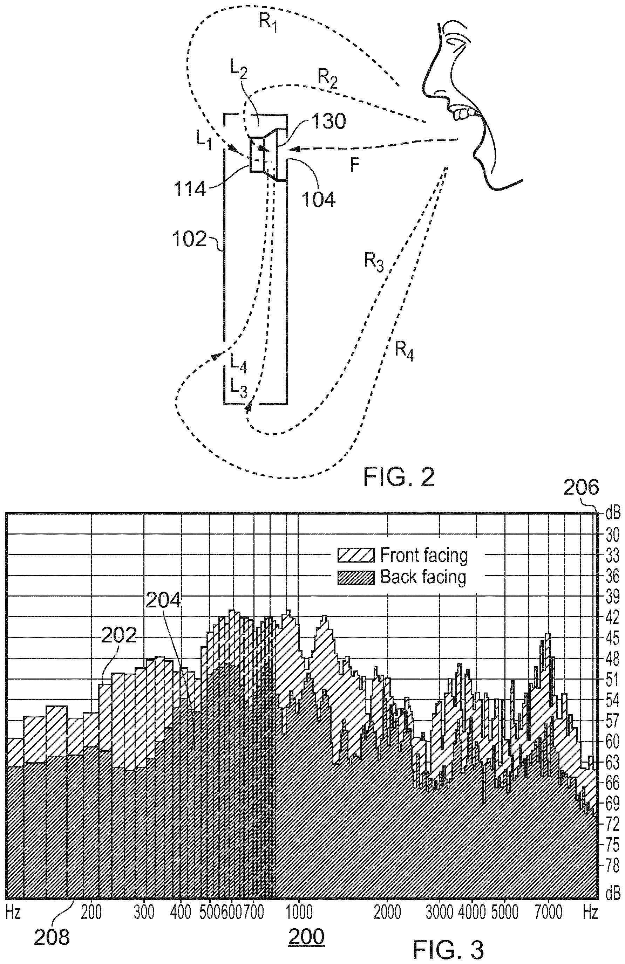

Referring now to figure 2, the speaker 114 may be mounted within the housing in a so-called "open back" configuration whereby the speaker is not enclosed in a separate module but the housing 102 provides the back volume denoted V. The mobile phone housing 102 may have unintentional and uncontrolled acoustic leak apertures, indicated as L₁₋₄, which may result in an acoustical shortcut between the front side and the back side of the receiver speaker membrane 130. These acoustic leak apertures may be for example due to gaps in the mobile phone housing 102. Alternatively or in addition these leak apertures may be apertures formed in the housing for other purposes. Alternatively or in addition the mobile phone housing may be at least partially acoustically transparent due to the material and or thickness of areas of the housing.

For a sound source for example from a user speaking in front of the mobile phone 100, the sound pressure wave may reach the front of the receiver speaker membrane 130 through the front port, denoted as acoustic path F, but also the back of the receiver speaker membrane 130 through the multiple leak paths indicated as R₁ to R₄. This acoustical shortcut may cause the receiver speaker to behave as a gradient pressure transducer, whereby the amplitude of the sound pressure wave picked-up (or transmitted) by the receiver speaker 114 may be a function of the angle of incidence of the sound wave. The rear leak paths R1 to R4 may be undefined and dependent on the mechanical construction of the device. However, the surprising result is that the speaker may have a directional response when configured as a microphone.

The directional response may make it possible to use the receiver speaker of a mobile phone as a directional microphone across the front-back axis and allow front-back sound discrimination, especially in applications where the mobile phone is held vertically such as during a video calling or while video recording or cam-cording.

Figure 3 shows a graph 200 of an example frequency response of a receiver speaker in a mobile phone when configured as a microphone. The x-axis 208 shows the frequency varying between 0 Hz and approximately 10 kHz. The y-axis 206 shows the gain in relative decibels between approximately -100 dB to -30 dB. Frequency response 202 shows the response for the situation where the acoustic sources are located at the front of the mobile phone, that is to say the acoustic waves are travelling from the acoustic sources towards the major surface of the mobile phone containing the speaker aperture 104. The frequency response 204 shows the response for the situation where the acoustic source is behind the mobile phone, that is to say the acoustic waves are travelling from the acoustic sources towards the major surface of the phone which is opposite the surface having the speaker aperture 104. As can be seen, the gain for the front facing response 202 is significantly higher than the gain of the back facing response 204. For example, at a frequency of approximately 7 kHz the gain for the front facing source is approximately -45 dB and the gain for the back-facing source is approximately -57 dB. At a frequency of approximately 1 kHz the gain for the front facing source is approximately -43 dB and the gain for the rear facing source is approximately -55 dB. At a frequency of approximately 300 Hz the gain for the front facing source is approximately -50 dB and the gain for the rear facing source is approximately -64 dB. In general the gain for a front-facing source may be more than 6 dB higher than for a back facing acoustic source. For a use case where the desired acoustic source is located in front of the mobile device and a noise source is located at the back of the mobile device, it will be appreciated that this may improve the signal to noise ratio by more than 6 dB. It will be appreciated that the terms front-facing and back-facing may be considered as relative terms used to refer to opposing major surfaces of the housing of the mobile phone.

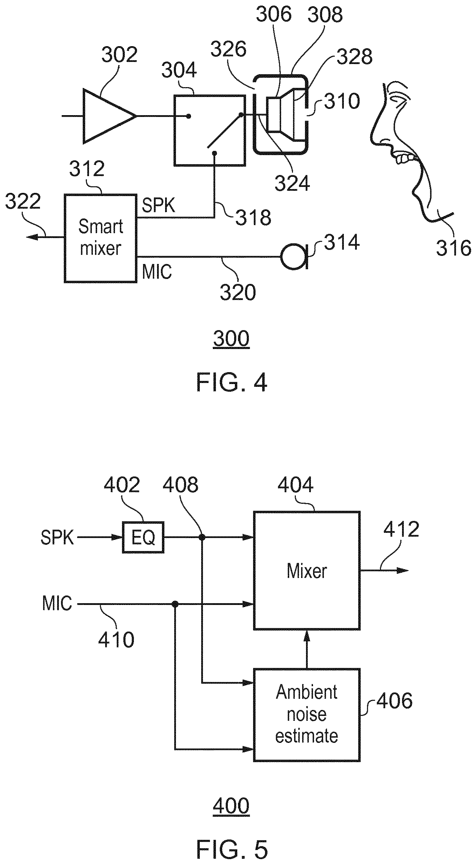

Figure 4 shows a mobile device 300. The mobile device 300 may have a housing 308 and an aperture 312 in one of the surfaces of the housing 308 which may be considered as the front of the mobile device 300. The mobile device 300 may have a microphone 314. A speaker 306 may include a speaker membrane or diaphragm 328 and emit the acoustic signal, typically an audible signal which may for example contain speech and/or music through the aperture 310. The speaker membrane 328 may have a first side or surface which may face towards the aperture 312 so may be considered for example front facing. The speaker membrane 328 may have a second side or surface facing away from the aperture 310 so may be considered back facing. The housing 308 may have a further aperture 326 which may provide a further acoustic path from the exterior of the mobile device 300 to the second side of the speaker membrane 328 via the back of the speaker 306. The skilled person will appreciate that there may be an acoustic path through the back of the speaker to the second side of the speaker membrane 328 via the further aperture 326. Consequently the further aperture 326 in the housing 308 may provide an acoustic coupling between the second side of the speaker membrane 328 and the exterior of the mobile device 300.

The speaker 306 may be driven by an amplifier 302 which may be a class D audio amplifier connected to the speaker 306 via a switch 304. The switch 304 may be controlled by a controller (not shown) and connect the amplifier 302 to the speaker 306. The switch 304 may connect a first acoustic processor input 318 of the acoustic processor 312 to the speaker 306. A microphone 314 which may be an omnidirectional microphone may be connected to a second acoustic processor input 320.

The acoustic processor 312 may be implemented in hardware/software or a combination of hardware and software. The acoustic processor 312 may be implemented for example using software for execution on a digital signal processor. The software may be stored in a memory such as RAM, ROM or EPROM or other non-transitory, tangible machine readable storage medium. The acoustic processor 312 may apply filters, and/or equalization to a signal received on the first acoustic processor input 318 and a further signal received on the second acoustic processor input 320. The acoustic processor 312 may apply threshold value to the acoustic signal that is to say compare the acoustic signal with an expected minimum level. It will be appreciated that the acoustic processor 312, the amplifier 302 which may be a class D audio amplifier and the switch 304 are illustrated as being outside the housing 308 but may be contained within the housing 308 of the mobile device 300.

In operation of the mobile device 300, in a first mode the amplifier 302 may be connected to the loudspeaker 306 via the switch 304. The speaker 306 may then be used in its intended operation mode as a speaker for emitting an audio signal or other acoustic signal. In a second mode of operation, the acoustic processor input 312 may be connected to one or more speaker terminals 324 via the switch 304. Speech from a user 316 of the mobile device 300 may induce a signal on the terminals 324 of the speaker 306. The speech signal may be processed by the acoustic processor 312 and the processed speech signal may be output on the acoustic processor output 322. The characteristic of acoustic signals received via the speaker 306 used in this way may be direction dependent and so may be processed to discriminate between speech or other acoustic source dependent on the location of the acoustic source with respect to the front surface of the mobile device 300. A further signal sensed via the microphone 314 may not be direction dependent. The acoustic processor may mix the acoustic signal received from the speaker 306 with the further acoustic signal received from the microphone to reduce the background noise present in the processed signal. The skilled person will appreciate that since the distance between the speaker and a microphone is known, by filtering the received acoustic signal and the further acoustic signal, the processed mixed signal from the output of the acoustic processor may have different polar characteristics than the characteristics of the microphone or speaker in isolation. Filtering or other beam forming techniques may be used to respond selectively to a sound source from a particular direction. Consequently the processed signal may improve the quality of the speech signal or other desired source with respect to background acoustic signals.

Figure 5 shows an example of an acoustic processor 400. An equaliser 402 may receive an input signal from a speaker. The output 408 of the equaliser 402 may be connected to an ambient noise estimator 406. The output 408 of equaliser 402 may also be connected to the mixer 404. A microphone input 410 may be connected to the mixer 404 and the ambient noise estimator 406. Equaliser 402 may align the speaker and microphone responses for a sound source. The mixer output 412 may be the output of the acoustic processor 400. The mixer 404 may delay and sum the responses of particular frequencies for the speaker and the microphone such that they interfere constructively or destructively for a specific location. The mixer 404 may apply other beam forming techniques. The skilled person will appreciate that the resulting output of the mixer 404 may shape the polar pattern of the signal from the microphone input 410 and the signal from the equalizer output 408 which corresponds to the signal from the speaker used as a microphone.

In operation the background noise level may be estimated by the ambient noise estimator 406. The ambient noise estimator may determine an estimate of the background noise level from the signal to noise ratio value of the input signals. The ambient noise estimator 406 may use either or both of the signals received via the equaliser output 408 or the microphone input 410. Dependent on the background noise level, the mixing ratio between the equalised speaker signal on equaliser output 408, and the microphone signal received on the microphone input 410, may be modified. For low ambient noise levels, only the microphone signal may be used. A low ambient noise level may be for example a level that corresponds to a signal to noise ratio value of above 20dB measured in decibels for the unprocessed signal. At a high ambient noise levels, only the speaker may be used. A high ambient noise level may for example be a noise level resulting in a signal to noise ratio value of -20dB or less measured in decibels for the unprocessed signal. For intermediate ambient noise levels the processed output signal may include a mix of both signals received from the equaliser output 408 and the microphone input 410 may be used. The skilled person will appreciate that the noise estimation and the mixing may be performed in different frequency bands.

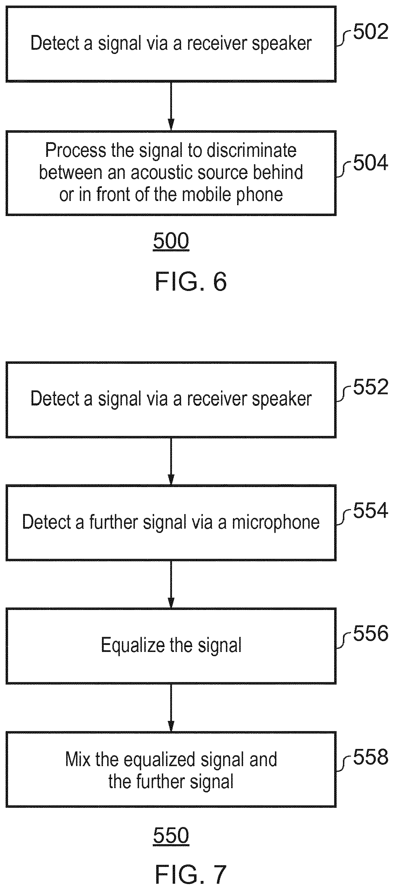

Figure 6 shows a method of acoustic processing for a mobile phone 500. In step 502 is an acoustic signal may be detected by a receiver speaker. The acoustic signal may include a desired signal generated from an acoustic source such as a person speaking, a music source, or some other acoustic source. The acoustic signal may include an undesired noise signal from other acoustic sources. In step 504, the acoustic signal may be processed to discriminate between a desired acoustic source located at the front of the mobile phone and an undesired acoustic source. The acoustic signal characteristics of the processed signal received via the receiver speaker may vary dependent on whether the acoustic sources are located behind or in front of the mobile phone. These acoustic signal characteristics for example gain may be used to determine whether or not the acoustic source is behind or in front of the phone. Alternatively or in addition, when in a certain operating mode, for example in a mobile phone operating in hands-free mode, the receiver speaker may be configured as a microphone and used to improve the speech capture of a user of the mobile phone.

The method steps 500 may be implemented in hardware, software or a combination of hardware and software. For example, the method may be implemented in software running on a digital signal processor.

Figure 7 shows a method of acoustic processing for a mobile device 550. In step 552 a signal may be detected by a receiver speaker. In step 554 a further signal may be detected via a microphone. In step 556 the signal may be equalised. Equalisation may align the response of the receiver speaker and the microphone to a source located at the front of a mobile device. The equalization may be an adaptive equalization. The front of the mobile device may be a surface containing the aperture for the receiver speaker. In step 558 the signal and further signal may be mixed. Mixing the signal and the further signal in different proportions may improve the signal-to-noise ratio of the processed output signal dependent on the ambient noise level. By aligning the response of the microphone to that of the speaker, the response of the microphone may be more sensitive to an acoustic source located at the front of the mobile device.

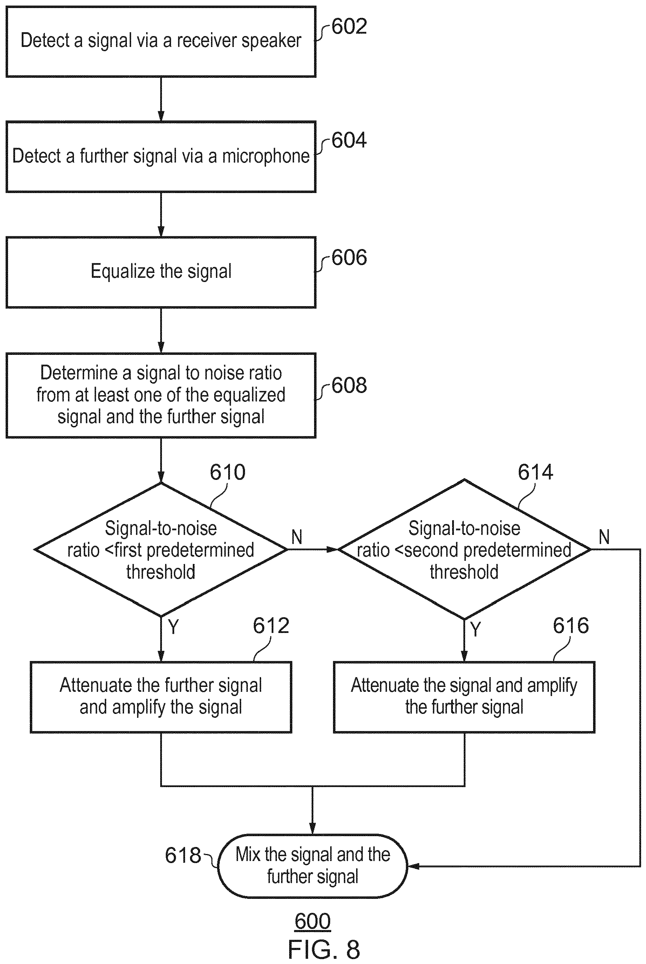

Figure 8 shows a method of acoustic processing for directional sound capture 600 for a mobile device such as a mobile phone. In step 602 a signal may be detected via a speaker. This signal may be generated from in response to acoustic waves from an acoustic source. In step 604 a further signal may be detected via a microphone which may be an omnidirectional microphone. In step 606 the signal may be equalised. In step 608 a signal to noise ratio may be determined from at least one of the signal and the further signal. In step 610 a comparison may be made to determine whether the signal to noise ratio is less than a first predetermined threshold. If the signal to noise ratio is less than the first predetermined threshold then the method may move to step 612 and the further signal may be attenuated, and the signal may be amplified. The attenuation of the further signal may be at a level at which the further signal is completely supressed. Following step 612, the signal and attenuated further signal may be mixed or combined in step 618 to give the processed output signal. Returning to step 610, if the signal to noise ratio is greater than the first predetermined threshold then the method may move to step 614 where the signal to noise ratio is compared to a second predetermined threshold. In step 614 if the signal to noise ratio is greater than the second predetermined threshold then the method moves to step 616, and the signal may be attenuated and the further signal may be amplified. The attenuation of the signal may be at a level at which the signal is completely supressed. Following step 616, the signal and further signal may be mixed or combined in step 618 to give the processed output signal. Returning to step 614 if the signal to noise ratio is less than the second predetermined threshold the signal and further signal may be mixed or combined in step 618 to give the processed output signal.

At high ambient noise levels the processed signal may be dominated by the signal received via the speaker. At lower ambient noise levels, the processed signal may be dominated by the signal received via the microphone. By varying the contribution of the signal and further signal to the processed signal output, the signal to noise ratio of the processed output signal may be improved.

In embodiments, the mobile devices described herein may include a laptop, mobile phone, a wearable device such as a smart watch, a portable digital assistant, a laptop computer, a tablet computer or any other portable audio device having a speaker with an acoustic path which may be a leak path from the exterior of the mobile device to the back volume of the speaker.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A mobile device (100) comprising: an acoustic processor (116); a speaker (114) including a speaker membrane (130), the speaker membrane having a first speaker membrane side and second speaker membrane side opposite the first speaker membrane side; a mobile device housing (102) for providing a first acoustic path between the first speaker membrane side and the exterior of the mobile device and a second acoustic path between the second speaker membrane side and the exterior of the mobile device;
wherein the mobile device is operable to configure the speaker as a microphone, and
the acoustic processor is configured and arranged to:
sense a signal on an acoustic processor input (120) coupled to at least one terminal (124) of the speaker;
process the induced signal to discriminate between acoustic waves from different directions;
and output the processed signal on an acoustic processor output.

2. The mobile device of claim 1 further comprising a microphone (314) wherein the acoustic processor is further configured to mix the induced signal with a further signal sensed via a microphone.

3. The mobile device of claim 2 wherein the acoustic processor is further configured to equalize the induced signal and to apply beam-forming to the induced signal and the further signal.

4. The mobile device of claim 2 or 3 wherein the acoustic processor is further configured to determine a signal to noise ratio from at least one of the induced signal and the further signal and to alter the mixing ratio between the induced signal and the further signal dependent on the signal to noise ratio.

5. The mobile device of any preceding claim wherein the acoustic processor is further configured to process the induced signal to discriminate between an acoustic signal received from an acoustic source in a first direction and a further acoustic signal received from a further acoustic source in a second direction.

6. The mobile device of any preceding claim comprising a camera wherein the mobile device is configurable in a camcorder mode of operation, and the acoustic processor is further configured to store the processed signal.

7. The mobile device of any of claims 1 to 5 comprising a camera and wherein the mobile device is configurable in a video call mode, and further configured to transmit the processed signal to a receiver of a video call.

8. The mobile device of any preceding claim configured as one of a mobile phone, a wearable device, a portable audio player, a personal digital assistant, a laptop, a tablet computer.

9. A method of acoustic processing (500) for a mobile device (100), the mobile device comprising a speaker including a speaker membrane, the speaker membrane having a first speaker membrane side and second speaker membrane side opposite the first speaker membrane side, a mobile device housing for acoustically coupling each speaker membrane side to the exterior of the mobile device,
the method comprising:
sensing a signal (502) induced on at least one terminal of the speaker in response to acoustic waves,
processing the induced signal (504) to discriminate between acoustic waves from different directions; and
outputting a processed signal.

10. The method of claim 9 further comprising sensing a further signal via a microphone, and combining the induced signal and the further signal.

11. The method of claim 10 further comprising estimating the signal to noise ratio from the further signal.

12. The method of claims 10 or 11 further comprising estimating the signal to noise ratio value from the induced signal.

13. The method of any of claims 10 to 12 wherein processing the induced signal comprises at least one of attenuating the induced signal for a signal to noise ratio value above a predetermined threshold and attenuating the further signal for a signal to noise ratio value below the predetermined threshold.

14. In a mobile device comprising a speaker including a speaker membrane, the speaker membrane having a first speaker membrane side and second speaker membrane side opposite the first speaker membrane side, a mobile device housing for providing a first acoustic path between the first speaker membrane side and the exterior of the mobile device and a second acoustic path between the second speaker membrane side and the exterior of the mobile device,
the use of the speaker as a directional microphone.

## Patentansprüche

1. Mobilvorrichtung (100) mit: einem Akustikprozessor (116); einem Lautsprecher (114) einschließlich einer Lautsprechermembran (130), wobei die Lautsprechermembran eine erste Lautsprechermembranseite und eine zweite Lautsprechermembranseite hat, die der ersten Lautsprechermembranseite entgegengesetzt ist; einem Mobilvorrichtungsgehäuse (102) zum Bereitstellen eines ersten Akustikpfades zwischen der ersten Lautsprechermembranseite und der Außenseite der Mobilvorrichtung und eines zweiten Akustikpfades zwischen der zweiten Lautsprechermembranseite und der Außenseite der Mobilvorrichtung;
wobei die Mobilvorrichtung dazu betreibbar ist, den Lautsprecher als ein Mikrofon zu konfigurieren, und
der Akustikprozessor dazu konfiguriert und eingerichtet ist:
ein Signal an einem Akustikprozessoreingang (120) zu erfassen, der zumindest mit einem Anschluss (124) des Lautsprechers gekoppelt ist;
das induzierte Signal zu verarbeiten, um zwischen Akustikwellen aus verschiedenen Richtungen zu unterscheiden;
und das verarbeitete Signal an einem Akustikprozessorausgang abzugeben.

2. Mobilvorrichtung gemäß Anspruch 1, des Weiteren mit einem Mikrofon (314), wobei der Akustikprozessor des Weiteren dazu konfiguriert ist, das induzierte Signal mit einem weiteren Signal zu mischen, das über ein Mikrofon erfasst wird.

3. Mobilvorrichtung gemäß Anspruch 2, wobei der Akustikprozessor des Weiteren dazu konfiguriert ist, das induzierte Signal anzugleichen und ein Beamforming auf das induzierte Signal und das weitere Signal anzuwenden.

4. Mobilvorrichtung gemäß Anspruch 2 oder 3, wobei der Akustikprozessor des Weiteren dazu konfiguriert ist, ein Signal-zu-Stör-Verhältnis zumindest entweder aus dem induzierten Signal oder dem weiteren Signal zu bestimmen und das Mischverhältnis zwischen dem induzierten Signal und dem weiteren Signal in Abhängigkeit von dem Signal-zu-Stör-Verhältnis zu ändern.

5. Mobilvorrichtung gemäß einem der vorherigen Ansprüche, wobei der Akustikprozessor des Weiteren dazu konfiguriert ist, das induzierte Signal zu verarbeiten, um zwischen einem Akustiksignal, das von einer Akustikquelle in einer ersten Richtung empfangen wird, und einem weiteren Akustiksignal zu unterscheiden, das von einer weiteren Akustikquelle in einer zweiten Richtung empfangen wird.

6. Mobilvorrichtung gemäß einem der vorherigen Ansprüche, mit einer Kamera, wobei die Mobilvorrichtung in einem Camcorder-Betriebsmodus konfigurierbar ist und der Akustikprozessor des Weiteren dazu konfiguriert ist, das verarbeitete Signal zu speichern.

7. Mobilvorrichtung gemäß einem der Ansprüche 1 bis 5, mit einer Kamera, und wobei die Mobilvorrichtung in einem Videoanrufmodus konfigurierbar ist, und die des Weiteren dazu konfiguriert ist, das verarbeitete Signal zu einem Empfänger eines Videoanrufs zu senden.

8. Mobilvorrichtung gemäß einem der vorherigen Ansprüche, die entweder als ein Mobiltelefon, eine tragbare Vorrichtung, ein tragbares Audioabspielgerät, ein PDA, ein Laptop oder ein Tabletcomputer konfiguriert ist.

9. Verfahren einer Akustikverarbeitung (500) für eine Mobilvorrichtung (100), wobei die Mobilvorrichtung einen Lautsprecher, der eine Lautsprechermembran hat, wobei die Lautsprechermembran eine erste Lautsprechermembranseite und eine zweite Lautsprechermembranseite hat, die der ersten Lautsprechermembranseite entgegengesetzt ist, ein Mobilvorrichtungsgehäuse zum akustischen Koppeln der jeweiligen Lautsprechermembranseite zu der Außenseite der Mobilvorrichtung aufweist,
wobei das Verfahren Folgendes aufweist:
Erfassen eines Signals (502), das zumindest an einem Anschluss des Lautsprechers als Reaktion auf Akustikwellen induziert wird,
Verarbeiten des induzierten Signals (504), um zwischen Akustikwellen aus verschiedenen Richtungen zu unterscheiden; und
Abgeben eines verarbeiteten Signals.

10. Verfahren gemäß Anspruch 9, des Weiteren mit einem Erfassen eines weiteren Signals über ein Mikrofon und ein Kombinieren des induzierten Signals und des weiteren Signals.

11. Verfahren gemäß Anspruch 10, des Weiteren mit einem Schätzen des Signal-zu-Stör-Verhältnisses aus dem weiteren Signal.

12. Verfahren gemäß Anspruch 10 oder 11, des Weiteren mit einem Schätzen des Signal-zu-Stör-Verhältniswerts aus dem induzierten Signal.

13. Verfahren gemäß einem der Ansprüche 10 bis 12, wobei ein Verarbeiten des induzierten Signals zumindest entweder ein Dämpfen des induzierten Signals für einen Signal-zu-Stör-Verhältniswert oberhalb eines vorbestimmten Schwellwerts oder ein Dämpfen des weiteren Signals für einen Signal-zu-Stör-Verhältniswert unterhalb des vorbestimmten Schwellwerts aufweist.

14. Bei einer Mobilvorrichtung, die einen Lautsprecher, der eine Lautsprechermembran hat, wobei die Lautsprechermembran eine erste Lautsprechermembranseite und eine zweite Lautsprechermembranseite hat, die der ersten Lautsprechermembranseite entgegengesetzt ist, ein Mobilvorrichtungsgehäuse zum Bereitstellen eines ersten Akustikpfades zwischen der ersten Lautsprechermembranseite und der Außenseite der Mobilvorrichtung und eines zweiten Akustikpfades zwischen der zweiten Lautsprechermembranseite und der Außenseite der Mobilvorrichtung aufweist,
die Verwendung des Lautsprechers als ein Richtmikrofon.

## Revendications

1. Dispositif mobile (100) comprenant : un processeur acoustique (116) ; un haut-parleur (114) comportant une membrane de haut-parleur (130), la membrane de haut-parleur présentant un premier côté de membrane de haut-parleur et un second côté de membrane de haut-parleur opposé au premier côté de membrane de haut-parleur ; un boîtier de dispositif mobile (102) pour fournir un premier chemin acoustique entre le premier côté de membrane de haut-parleur et l'extérieur du dispositif mobile et un second chemin acoustique entre le second côté de membrane de haut-parleur et l'extérieur du dispositif mobile ;
dans lequel le dispositif mobile est exploitable pour configurer le haut-parleur en tant que microphone, et
le processeur acoustique est configuré et agencé pour :
détecter un signal sur une entrée de processeur acoustique (120) couplée à au moins une borne (124) du haut-parleur ;
traiter le signal induit pour différencier des ondes acoustiques provenant de directions différentes ;
et produire en sortie le signal traité sur une sortie de processeur acoustique.

2. Dispositif mobile selon la revendication 1 comprenant en outre un microphone (314) dans lequel le processeur acoustique est configuré en outre pour mixer le signal induit avec un autre signal détecté par l'intermédiaire d'un microphone.

3. Dispositif mobile selon la revendication 2 dans lequel le processeur acoustique est configuré en outre pour égaliser le signal induit et appliquer une formation de faisceau au signal induit et à l'autre signal.

4. Dispositif mobile selon la revendication 2 3 dans lequel le processeur acoustique est configuré en outre pour déterminer un rapport signal/bruit à partir d'au moins un du signal induit et de l'autre signal et modifier le rapport de mixage entre le signal induit et l'autre signal en fonction du rapport signal/bruit.

5. Dispositif mobile selon n'importe quelle revendication précédente dans lequel le processeur acoustique est configuré en outre pour traiter le signal induit afin de différencier un signal acoustique reçu depuis une source acoustique dans une première direction d'un autre signal acoustique reçu depuis une autre source acoustique dans une seconde direction.

6. Dispositif mobile selon n'importe quelle revendication précédente comprenant une caméra, le dispositif mobile étant configurable dans un mode de fonctionnement de caméscope, et le processeur acoustique est configuré en outre pour mémoriser le signal traité.

7. Dispositif mobile selon l'une quelconque des revendications 1 à 5 comprenant une caméra et le dispositif mobile étant configurable dans un mode d'appel vidéo, et configuré en outre pour transmettre le signal traité à un récepteur d'un appel vidéo.

8. Dispositif mobile selon n'importe quelle revendication précédente configuré en tant qu'un d'un téléphone mobile, dispositif portable, lecteur audio portable, assistant numérique personnel, ordinateur personnel, tablette informatique.

9. Procédé de traitement acoustique (500) pour un dispositif mobile (100), le dispositif mobile comprenant un haut-parleur comportant une membrane de haut-parleur, la membrane de haut-parleur présentant un premier côté de membrane de haut-parleur et un second côté de membrane de haut-parleur opposé au premier côté de membrane de haut-parleur, un boîtier de dispositif mobile pour coupler acoustiquement chaque côté de membrane de haut-parleur à l'extérieur du dispositif mobile ;
le procédé comprenant :
la détection d'un signal (502) induit sur au moins une borne du haut-parleur en réponse à des ondes acoustiques,
le traitement du signal induit (504) pour différencier des ondes acoustiques provenant de directions différentes ; et
la production en sortie d'un signal traité.

10. Procédé selon la revendication 9 comprenant en outre la détection d'un autre signal par l'intermédiaire d'un microphone, et la combinaison du signal induit et de l'autre signal.

11. Procédé selon la revendication 10 comprenant en outre l'estimation du rapport signal/bruit à partir de l'autre signal.

12. Procédé selon la revendication 10 ou 11 comprenant en outre l'estimation de la valeur du rapport signal/bruit à partir du signal induit.

13. Procédé selon l'une quelconque des revendications 10 à 12 dans lequel le traitement du signal induit comprend au moins une d'une atténuation du signal induit pour une valeur de rapport de signal/bruit inférieure à un seuil prédéterminé et d'une atténuation de l'autre signal pour une valeur de rapport de signal/bruit inférieure au seuil prédéterminé

14. Dans un dispositif mobile comprenant un haut-parleur comportant une membrane de haut-parleur, la membrane de haut-parleur présentant un premier côté de membrane de haut-parleur et un second côté de membrane de haut-parleur opposé au premier côté de membrane de haut-parleur, un boîtier de dispositif mobile pour fournir un premier chemin acoustique entre le premier côté de membrane de haut-parleur et l'extérieur du dispositif mobile et un second chemin acoustique entre le second côté de membrane de haut-parleur et l'extérieur du dispositif mobile,
l'utilisation du haut-parleur en tant que microphone directionnel.
